Europäisches Patentamt

European Patent Office

Office européen des brevets

(11) Publication number: **0 178 432**
**B1**

(12) **EUROPEAN PATENT SPECIFICATION**

(45) Date of publication of patent specification: **17.10.90**

(51) Int. Cl.⁵: **G 06 F 7/58**

(21) Application number: **85110592.4**

(22) Date of filing: **23.08.85**

(54) Pseudorandom number generator.

(30) Priority: **15.10.84 JP 214467/84**

(43) Date of publication of application:
**23.04.86 Bulletin 86/17**

(45) Publication of the grant of the patent:
**17.10.90 Bulletin 90/42**

(84) Designated Contracting States:
**DE FR GB**

(56) References cited:
**FR-A-2 172 460**
**US-A-4 161 041**

**PROCEEDINGS OF THE IEEE, vol. 121, no. 8, August 1974, pages 905,906, Stevenage, GB; K.J. LATAWIEC: "New method of generation of shifted linear pseudorandom binary sequences"**

(73) Proprietor: **International Business Machines Corporation**
**Old Orchard Road**
**Armonk, N.Y. 10504 (US)**

(72) Inventor: **Tezuka, Shu**
**Mutsumi-soh 11 goh 3-25-3 Ebisu**
**Shibuya-ku Tokyo-to (JP)**

(74) Representative: **Grant, Iain Murray**
**IBM United Kingdom Limited Intellectual Property Department Hursley Park**
**Winchester Hampshire SO21 2JN (GB)**

Courier Press, Leamington Spa, England.

## Description

This invention relates to a pseudorandom number generator using a shift register circuit.

Computer generation of random numbers is needed in many fields of computer application, e.g. simulation, cryptography and gaming etc. However, random number generators heretofore used have unsatisfactory statistical property, particularly the nonrandomness in multidimensional space. For example, the congruential method has so-called 'crystal structure' in multi-dimensional space, which is considered the fatal defect of this method. Another problem of the conventional methods is difficulty of hardware implementation. In order to generate random variates faster, it is required to implement a random number generator on hardware.

Uniformly distributed random number generators using a maximum length shift register sequence generator (hereinafter called M-sequence generator) are recently attracting attention. The M-sequence generator is that in which the constant polynomial is selected the primitive polynomial on the Galois field, and in which the period of output sequence is maximized within the range where the constant polynomial has the same order. Of course, consideration must be given to the manner in which the elements are taken out of the series generated by the M-sequence generator to use them as a random number. For instance, when random numbers are selected from an M-sequence $\{a_i\}$ as $\{a_j, ..., a_{j+k}\}$, $\{a_{j+1}, ..., a_{j+k+1}\}$, $\{a_{j+2}, ..., a_{j+k+2}\}$, there is a strong correlation between consecutive random numbers, which is inadequate.

As dominant methods to generate uniformly distributed random numbers from an M-sequence, the Tausworthe method and the Lewis and Payne method are known.

In the Tausworthe method, an I-bit binary decimal

$$W_i = 0.a\sigma_{i+r-1} \, a\sigma_{i+r-2} \cdots a_{it+r-1}$$

is obtained by arranging I consecutive elements of the M-sequence $\{a_i\}$, $(I \leqq p,\ p = $ dimension number of a constant poynomial), and it is made to be a random number. In the above equation, $\sigma$ is the distance at which I consecutive elements are taken out from the M-sequence. This method is summarized in Figure 5. In random numbers thus generated, if the period T of the M-sequence and distance $\sigma$ are selected to be prime with each other, the cycle of $\{W_i\}$ also becomes T, and "0" appears $2^{p-l}-l$ times and each of other elements appears $2^{p-l}$ times in a period. Therefore, if p is sufficiently larger than I, it is seen that these random numbers are uniformly distributed.

The Lewis and Payne method uses

$$f(D) = D^p + D^q + 1 \ (p > q)$$

as a characteristic equation, and a binary decimal

$$W_i = 0.a_i a_{i + \tau_2} ... a_{i + \tau_3}$$

is obtained by taking out the elements of M-sequence $\{d_i\}$ at a suitable interval and arranging the resultant elements, and is made to be a random number. This method is summarized in Figure 6. The M-sequence $\{a_i\}$ satisfies the recurrence formula:

$$a_i = a_{i-p} + a_{i-q} \ (\text{mod } 2)$$

As the result, $\{W_i\}$ is produced by the recurrence formula:

$$W_i \ W_{i-p} \oplus W_{i-q}$$

where $\oplus$ is the exclusive logic sum of each bit.

The above two methods, however, have serious faults. In the Tausworthe method, a long time is required to generate random numbers. In the Lewis and Payne method, the uniformity becomes ambiguous. The uniformity of random numbers is not guaranteed by this method itself, and the presence of uniformity must be reviewed.

Therefore, it is the object of this invention to provide a pseudo-random number generator to generate high-quality random numbers by the use of an M-series generator in a simple hardware circuit. This object is achieved by the invention described in claim 1; embodiments of the invention are characterized in the dependent claims.

It is pointed out that K. J. Latawiec discusses a "New method of generation of shifted linear psuedo-random binary sequences", pages 905—906, Proceedings of the IEE, Vol. 121, No. 8, August 1974 (Correspondence) indicates that any shifted sequence may be generated by a single linear-feedback shift register with extra modulo-2 adder driven from appropriately selected outputs of the register states. This disclosure does not show a random number generator of the Lewis and Payne type with at least two output bits. US—A—4 161 041 discloses a generator comprising a feedback shift register, the outputs of which are used to address a read-only memory in a particular manner possible "since there are more addresses than there are distinct output states" to produce psuedo-random numbers. Since, in a least some of the given examples, 64 shift register outputs can only generate 8 different output states, the function of the ROM can be thought of as "hashing".

The pseudo-random number generator proposed here comprises a shift register circuit to generate a sequence which has "1" and "0" as its elements, and a matrix product circuit to receive a parallel output A from this shift register circuit and execute the matrix product of A × G, wherein A represents a vector and G represents a matrix.

The output sequence from a shift register circuit such as an M-sequence generator is shuffled in a matrix product circuit to output the random number. As the characteristics of the random numbers are known from the matrix of the matrix circuit, no review of the statistical characteristics of the random numbers is required. The time required to generate random numbers is short, and the hardware expense small.

Besides by adequately selecting the matrix in the matrix product circuit, asymptotic s-bit random number can be generated easily.

A preferred embodiment of this invention is described below with reference to the drawings, where:

Figure 1 is a block diagramm showing an embodiment of this invention,

Figure 2 is a circuit diargram showing a configuration of the matrix product circuit 4 is Figure 1,

Figures 3 and 4 are diagrams to illustrate the embodiment of Figure 1, and

Figures 5 and 6 are diagrams to illustrate the Tausworthe method and the Lewis and Payne method, respectively.

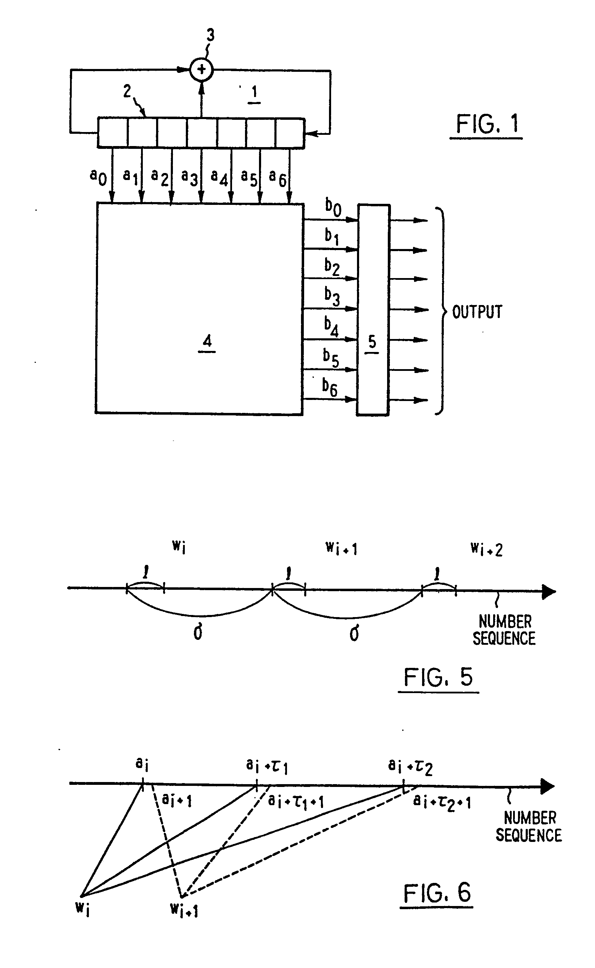

Figure 1 shows this embodiment. In Figure 1, the shift register circuit 1 consists of a 7-stage shift register 2 and an exclusive OR circuit 3. The characteristic equation of the shift register circuit 1 is $f(D) = D^7 + D^4 + 1$. The shift register circuit 1 is obviously an M-sequence generator, and has a period of $2^{7-1}$.

Outputs from each stage of the shift register 2 is supplied to the matrix product circuit 4 in parallel. This matrix product circuit 4 can be expressed by a matrix G.

$$G = \begin{bmatrix} 1 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ 0 & 1 & 0 & 1 & 1 & 0 & 0 \\ 1 & 1 & 1 & 0 & 1 & 1 & 1 \end{bmatrix}$$

If the output component from each stage in the shift register 2 is $a_i$ (i = 0 to 6), the output $b_j$ (j = 0 to 6) of the matrix product circuit 4 is

$$b_j = \sum_i a_i g_{ji}$$

(mod 2), where $g_{ji}$ is the component of the matrix G. The output of the matrix product circuit is once latched by the latch 5 and output as a binary decimal random number W.

$$W = 0, b_0 b_1 \ldots b_6$$

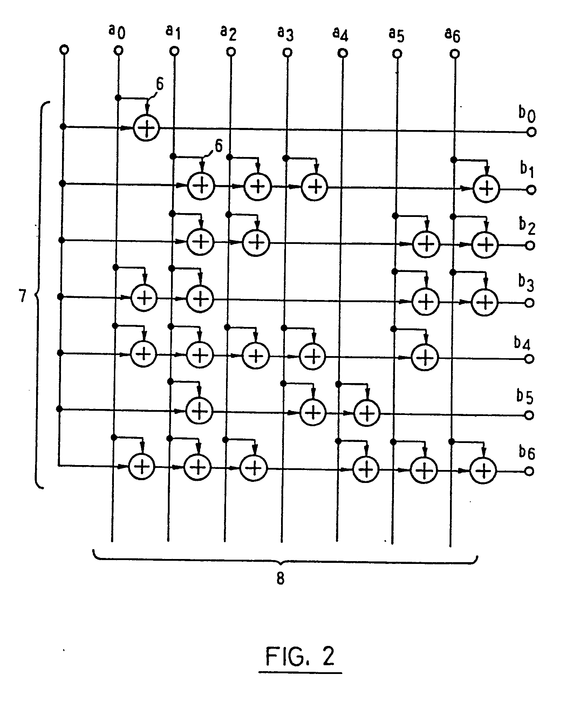

The matrix product circuit 4 may have a configuration, for example, as shown in Figure 2. In Figure 2, reference numbers 6, 7 and 8 designate an exclusive OR circuit, a row signal line, and a column signal line, respectively.

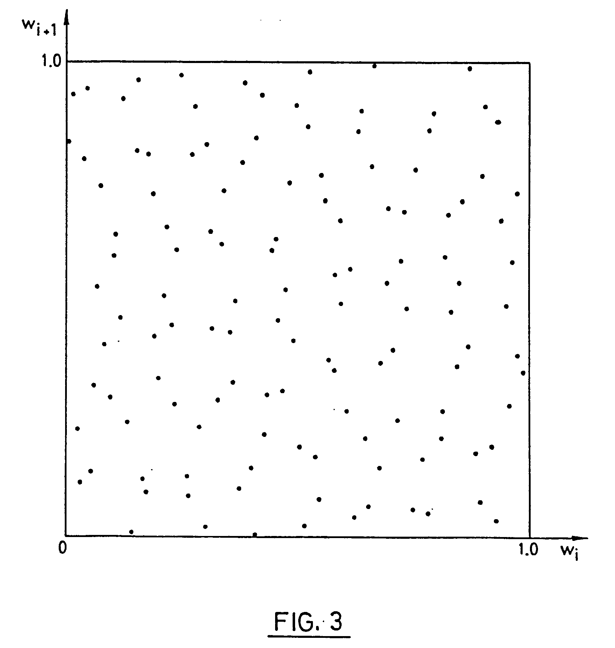

In order to know the characteristics of random numbers generated from this pseudorandom number generator, two-dimensional distribution was obtained. This is shown in Figure 3. The two-dimensional distribution is the distribution of consecutive random numbers $(W_i, W_{i+1})$. It can be seen that distribution shown in Figure 3 has no regularity but has uniformity. This means that the two consecutive random numbers have no relationship, and the probability of random number generation is not biased to a particular value. Therefore, it is known that the random numbers generated by this pseudorandom number generator have superior characteristics. The detail of the above will be understood later. Next, the meaning of the matrix G will be considered.

3

The conclusion is that random numbers generated by the matrix G are 7-bit Lewis and Payne asymptotically random numbers. The meaning of an asymptotically random number will be recognized later.

First a concept of k-distribution will be introduced. This concept is measurement of uniformity of random numbers.

Definition

Where the point whose coordinate components are k pieces of consecutive elements of a random number $\{W_i\}$ is represented by $x_i$, the random number $\{W_i\}$ is said to have k-distribution when $p(x_i = x) = 2^{-kl}$ for an arbitrary point x in a k-dimensional hyperplane lattice (whose coordinate components can be represented by l-bit binary decimals). Here, probability p means a relative frequency throughout the period.

Since the coordinate components are l bits and the dimension is k, the number of points in the hyperplane lattice is $2^{lk}$. If $p(x_i = x) = 2^{-kl}$, it is obvious that the random number $\{W_i\}$ is uniformly distributed to each point x.

For the distribution of the sequence $\{W_i\}$ based on the M-sequence, k-distribution can be defined as follows:

Definition

If $(W_i, W_{i+1}, \ldots W_{i+k-1})$ is deemed to be kl sets, $\{W_i\}$ shows k-distribution when sets in which all the components are 0's appear $2^{p-kl}$ r- 1 times, and all other patterns appear $2^{p-kl}$ times in a cycle. (It is obvious from this that $p \leqq kl$.)

When simulation is performed using k pieces of consecutive random numbers, it will be obvious that k-distribution is essential.

In the meanwhile in order that Lewis and Payne random numbers show k-distribution, it is necessary and sufficient that the random number $W_i$ is

$$W_i = 0.a_{j1+i}a_{j2+i} \cdots a_{jl+i}$$

$$k = \lfloor p/l \rfloor$$

and each row vector of the following matrix $\hat{G}$ is linear and independent. (For the detail, refer to Communications of the ACM, Vol. 26, pp. 516—523.)

$$
\begin{bmatrix}
A_{j1} \\
\cdot \\
\cdot \\
\cdot \\
A_{j1+k-1} \\
A_{j2} \\
\cdot \\
\cdot \\
\cdot \\
A_{j2+k-1} \\
\cdot \\
\cdot \\
\cdot \\
A_{j\ell} \\
\cdot \\
\cdot \\
\cdot \\
A_{j\ell+k-1}
\end{bmatrix}
=
\begin{bmatrix}
\widehat{G} \\
\\
\widehat{(G \text{ has } \ell, k \text{ rows} \\ \text{and } p \text{ columns})}
\end{bmatrix}
\cdot
\begin{bmatrix}
A_1 \\
A_2 \\
\cdot \\
\cdot \\
\cdot \\
A_i \\
\cdot \\
\cdot \\
\cdot \\
\cdot \\
\cdot \\
\cdot \\
A_p
\end{bmatrix}
$$

where $\{a_i\}$ is an M-sequence, p is the dimension of the M-sequence characteristic equation, $\lfloor p/l \rfloor$ is the maximum integer not exceeding p/l, and $A_i$ is $(a_i a_{i+1} \ldots)$.

This is applied to random numbers of p = 7 and l = 7. First $k = \lfloor 1/1 \rfloor = 1$. And then the requirement is met if the row vector of $\widehat{G}_7$ satisfying

$$
\begin{bmatrix} A_{j1} \\ A_{j2} \\ A_{j3} \\ A_{j4} \\ A_{j5} \\ A_{j6} \\ A_{j7} \end{bmatrix} = \begin{bmatrix} \hat{G}_7 \end{bmatrix} \cdot \begin{bmatrix} A_1 \\ A_2 \\ A_3 \\ A_4 \\ A_5 \\ A_6 \\ A_7 \end{bmatrix}
$$

is linear and independent. The suffix 7 of $\hat{G}_7$ indicates that $I = 7$.

On the other hand, the random numbers of the embodiment shown in Figure 1 can be expressed by

$$
\begin{bmatrix} A_{j1} \\ A_{j2} \\ A_{j3} \\ A_{j4} \\ A_{j5} \\ A_{j6} \\ A_{j7} \end{bmatrix} = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ 0 & 1 & 0 & 1 & 1 & 0 & 0 \\ 1 & 1 & 1 & 0 & 1 & 1 & 1 \end{bmatrix} \cdot \begin{bmatrix} A_1 \\ A_2 \\ A_3 \\ A_4 \\ A_5 \\ A_6 \\ A_7 \end{bmatrix}
$$

In the above equation, it is obvious that the row vector of the matrix G is linear and independent. From this fact, it is known that random numbers output from the matrix circuit 4, $(a_{j1} a_{j2} \ldots a_{j7}, (a_{j1+1} a_{j2+1} \ldots a_{j7+1})$ are seven-bits Lewis and Payne random numbers showing one dimensional distribution.

Next, the random numbers of this embodiment will be considered in relation to asymptotic random numbers.

In general when random numbers are used for the simulation of the Monte Carolo method and the like, the accuracy (bit length) required varies depending on the purpose. Therefore, it is desirable that k-distribution is guaranteed for arbitary bit lengths. Consider for example a sequence $a_{j1+i}, a_{j2+i}, a_{j3+i} \ldots$ when p = 7. Let it be assumed that one-dimensional distribution $(k = \lfloor 7/7 \rfloor = 1)$ is established when the upper 7 bits of this sequence are selected as random numbers but two-dimensions-distribution $(k = \lfloor 7/3 \rfloor = 2)$ is not established when the upper 3 bits of this sequence are selected random numbers. Then it is suitable to obtain random numbers of $I = 7$ from this sequence, but it is not suitable to obtain those of $I = 3$. This is inconvenient.

Asymptotic random numbers are random numbers from which the above inconvenience is eliminated. These can be defined as follows:

Definition:

Lewis and Payne random numbers which satisfy the following two conditions are defined as asymptotically random S-bit Lewis and Payne random numbers.

Condition 1: The row vector of the matrix $\hat{G}_I$ is linear and independent for arbitary $I$ ($\leqq s$)

Condition 2: The cycle is a prime number.

The condition 2 is needed to respond the following requirement. In general, in the case where random numbers are used in k-dimensional simulation, k sets of unoverlapped and uniformly distributed random numbers $W_i$ $(W_{kl}, W_{kl+1}, ... W_{kl+k-1})$ are used. Condition 2 is necessary to assure k-distribution for this sequence.

It is considered whether random numbers generated in the embodiment shown in Figure 1 are asymptotic random numbers or not. When $l = 7$, since $k = 1$ and the following equation is met,

$$\begin{bmatrix} A_{j1} \\ A_{j2} \\ A_{j3} \\ A_{j4} \\ A_{j5} \\ A_{j6} \\ A_{j7} \end{bmatrix} = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ 0 & 1 & 0 & 1 & 1 & 0 & 0 \\ 1 & 1 & 1 & 0 & 1 & 1 & 1 \end{bmatrix} \cdot \begin{bmatrix} A_1 \\ A_2 \\ A_3 \\ A_4 \\ A_5 \\ A_6 \\ A_7 \end{bmatrix}$$

it is obvious that linear uniform distribution is established.

When $l = 4$, 5 or 6, $k = 1$ and the following equations are derived from the above.

$$\begin{bmatrix} A_{j1} \\ A_{j2} \\ A_{j3} \\ A_{j4} \end{bmatrix} = \begin{bmatrix} 1 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \end{bmatrix} \cdot \begin{bmatrix} A_1 \\ A_2 \\ A_3 \\ A_4 \\ A_5 \\ A_6 \\ A_7 \end{bmatrix}$$

$$\begin{bmatrix} A_{j\,1} \\ A_{j\,2} \\ A_{j\,3} \\ A_{j\,4} \\ A_{j\,5} \end{bmatrix} = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \end{bmatrix} \cdot \begin{bmatrix} A_{1} \\ A_{2} \\ A_{3} \\ A_{4} \\ A_{5} \\ A_{6} \\ A_{7} \end{bmatrix}$$

$$\begin{bmatrix} A_{j\,1} \\ A_{j\,2} \\ A_{j\,3} \\ A_{j\,4} \\ A_{j\,5} \\ A_{j\,6} \end{bmatrix} = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ 0 & 1 & 0 & 1 & 1 & 0 & 0 \end{bmatrix} \cdot \begin{bmatrix} A_{1} \\ A_{2} \\ A_{3} \\ A_{4} \\ A_{5} \\ A_{6} \\ A_{7} \end{bmatrix}$$

From these equations, it is obvious that one-dimensional uniform distribution is established when I = 4, 5 or 6.

When I = 3, k = $\lfloor 7/3 \rfloor$ = 2, and the following equation is derived from $\hat{G}_7$ above,

$$\begin{bmatrix} A_{j1} \\ A_{j1+1} \\ A_{j2} \\ A_{j2+1} \\ A_{j3} \\ A_{j3+1} \end{bmatrix} = \begin{bmatrix} \overline{1 & 0 & 0 & 0 & 0 & 0 & 0} \\ \overline{0 & 1 & 1 & 1 & 0 & 0 & 1} \\ \overline{0 & 1 & 1 & 0 & 0 & 1 & 1} \end{bmatrix} \cdot \begin{bmatrix} A_{1} \\ A_{2} \\ A_{3} \\ A_{4} \\ A_{5} \\ A_{6} \\ A_{7} \end{bmatrix}$$

It is noted that row vectors of 2nd, 4th and 6th rows indicated by horizontal lines are primarily determined by row vectors of 1st, 3rd and 5th rows, respectively as follows. As conclusion, where an

8

arbitary row vector among 1st, 3rd and 5th row vectors is represented by $\overline{g}_j$, the row vector among 2nd, 4th and 6th row vectors corresponding to $\overline{g}_j$ is represented by $\overline{g}_{j+1}$, and $\overline{g}$ is expressed by $(g_1, g_2, g_3, \ldots g_7)$, $g_{j+1}$ can be obtained from $\overline{g}_j$ as follows:

$$g_{j+1, 1} = g_{j, 7}$$

$$g_{j+1, 2} = g_{j, 1}$$

$$g_{j+1, 3} = g_{j, 2}$$

$$g_{j+1, 4} = g_{j, 3} + g_{j, 7}$$

$$g_{j+1, 5} = g_{j, 4}$$

$$g_{j+1, 6} = g_{j, 5}$$

$$g_{j+1, 7} = g_{j, 6}$$

For example, since the row vector of the 3rd row $\overline{g}_{j2} = (0111001)$, the row vector of the 4th row $\overline{g}_{j2+1} = (1010100)$. Similarly, row vectors of 2nd and 6th rows are obtained, and the following matrix $\hat{G}_3$ is obtained.

$$\hat{G}_3 = \begin{bmatrix} 1 & 0 & 0 & 0 & 0 & 0 & 0 \\ 0 & 1 & 0 & 0 & 0 & 0 & 0 \\ 0 & 1 & 1 & 1 & 0 & 0 & 1 \\ 1 & 0 & 1 & 0 & 1 & 0 & 0 \\ 0 & 1 & 1 & 0 & 0 & 1 & 1 \\ 1 & 0 & 1 & 0 & 0 & 0 & 1 \end{bmatrix}$$

Since each row vector in this matrix $\hat{G}_3$ is linear and independent, it is known that random numbers of this embodiment show two-dimensional uniform distribution when $l = 3$.

Next, the fact that the row vector $\overline{g}_{j+1}$ is primarily determined from the row vector $\overline{g}_j$ will be considered.

As described above, when $l = 3$ and $k = 2$, the following equation is satisfied.

9

$$
\begin{bmatrix}
A_{j1} \\
A_{j1+1} \\
A_{j2} \\
A_{j2+1} \\
A_{j3} \\
A_{j3+1}
\end{bmatrix}
=
\begin{bmatrix}
\hat{G}_3
\end{bmatrix}
\cdot
\begin{bmatrix}
A_1 \\
A_2 \\
A_3 \\
A_4 \\
A_5 \\
A_6 \\
A_7
\end{bmatrix}
$$

From this equation, $A_j$ ($A_{j1}$, $A_{j2}$ or $A_{j3}$) is given by

$$A_j = g_{j,1} \cdot A_1 + g_{j,2} \cdot A_2 + g_{j,3} \cdot A_3 + g_{j,4} \cdot A_4 + g_{j,5} \cdot A_5 +_5 g_{j,6} \cdot A_6 + g_{j,7} \cdot A_7$$

In the above equation, if the phase of the sequence A is shifted by 1,

$$
\begin{bmatrix}
A_{j1+1} \\
A_{j1+2} \\
A_{j2+1} \\
A_{j2+2} \\
A_{j3+1} \\
A_{j3+2}
\end{bmatrix}
=
\begin{bmatrix}
\hat{G}_3
\end{bmatrix}
\cdot
\begin{bmatrix}
A_2 \\
A_3 \\
A_4 \\
A_5 \\
A_6 \\
A_7 \\
A_8
\end{bmatrix}
$$

is obtained. Thus, the following equation is satisfied.

$$A_{j+1} = g_{j,2} \cdot A_2 + g_{j,2} \cdot A_3 + g_{j,3} \cdot A_4 + g_{j,4} \cdot A_5 + g_{j,5} \cdot A_6 + g_{j,6} \cdot A_7 + g_{j,7} \cdot A_8$$

Since $a_i = a_{i-p} + a_{i-q}$ in Lewis and Payne sequene $\{a_i\}$ ($f(D) = D^p + D^q + 1$), $A_s = A_1 + A_4$. Consequently, $A_{j+1}$ can be arranged as

$$A_{j+1} = g_{j,7} \cdot A_1 + g_{j,1} \cdot A_2 + g_{j,2} \cdot A_3 + (g_{j,3} - g_{j,7}) \cdot A_4 + g_{j,4} \cdot A_5 + g_{j,5} \cdot A_6 + g_{j,6} \cdot A_7$$

It can be understood from the above that $\overline{g}_{j+1}$ can be obtained from $\overline{g}_j$.

Although only $g_{j+1}$ and $g_j$ have been described, it is matter of course that $\overline{g}_{j+2}$, $\overline{g}_{j+3}$ ... can be obtained from $\overline{g}_{j+1}$, $\overline{g}_{i+2}$ ..., respectively. Since this can be proved from the above, it is not repeated.

Let us return to the consideration of the asymptotic randomness of this embodiment. When $l = 2$, $k = \lfloor 7/2 \rfloor = 3$. From $\hat{G}_6$ and $\hat{G}_3$ along with these $l$ and $k$, the following is derived

$$
\begin{bmatrix} A_{j1} \\ A_{j1+1} \\ A_{j1+2} \\ A_{j2} \\ A_{j2+1} \\ A_{j2+2} \end{bmatrix}
=
\begin{bmatrix} 1\;0\;0\;0\;0\;0\;0 \\ 0\;1\;0\;0\;0\;0\;0 \\ \hline 0\;1\;1\;1\;0\;0\;1 \\ 1\;0\;1\;0\;1\;0\;0 \end{bmatrix}
\cdot
\begin{bmatrix} A_1 \\ A_2 \\ A_3 \\ A_4 \\ A_5 \\ A_6 \\ A_7 \end{bmatrix}
$$

In this case also, row vectors indicated by horizontal lines are determined from the row vectors immediately above them, and $\hat{G}_2$ is obtained as follows

$$
\hat{G}_2 =
\begin{bmatrix}
1\;0\;0\;0\;0\;0\;0 \\
0\;1\;0\;0\;0\;0\;0 \\
0\;0\;1\;0\;0\;0\;0 \\
0\;1\;1\;1\;0\;0\;1 \\
1\;0\;1\;0\;1\;0\;0 \\
0\;1\;0\;1\;0\;1\;0
\end{bmatrix}
$$

Since each row vector is linear and independent, it is understood that three-dimensional uniform distribution is established.

When $l = 1$, $k = \lfloor 7/1 \rfloor = 7$. From $\hat{G}_7$, $\hat{G}_3$ and $\hat{G}_2$ along with these $l$ and $k$, the following is derived

$$
\begin{bmatrix} A_{j1} \\ A_{j1+1} \\ A_{j1+2} \\ A_{j1+4} \\ A_{j1+5} \\ A_{j1+6} \end{bmatrix}
=
\begin{bmatrix} 1\;0\;0\;0\;0\;0\;0 \\ 0\;1\;0\;0\;0\;0\;0 \\ 0\;0\;1\;0\;0\;0\;0 \\ \hline \\ \hline \\ \hline \\ \hline \end{bmatrix}
\cdot
\begin{bmatrix} A_1 \\ A_2 \\ A_3 \\ A_4 \\ A_5 \\ A_6 \\ A_7 \end{bmatrix}
$$

In this case also, row vectors indicated by horizontal lines are sequentially determined from row vectors immediately above them, and $\hat{G}_3$ is obtained as follows

$$\hat{G}_3 = \begin{bmatrix} 1 & 0 & 0 & 0 & 0 & 0 & 0 \\ 0 & 1 & 0 & 0 & 0 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \end{bmatrix}$$

Since each row vector is linear and independent, it is known that 7-dimensional uniform distribution is established.

It is known from the above, that the random numbers of this embodiment are asymptotic 7-bit random numbers.

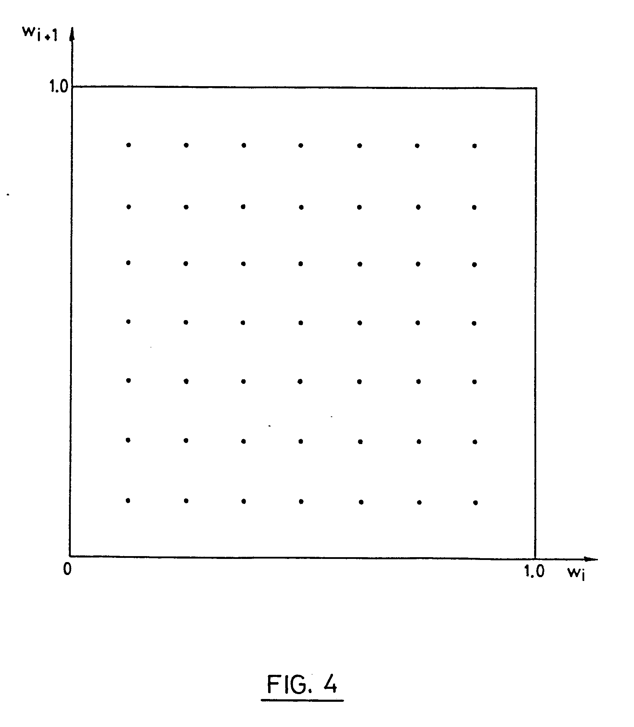

Figure 4 shows two-dimensional uniform distribution where the upper 3 bits of random numbers of this embodiment are used, whereas Figure 3 shows two-dimensional distribution where all the bits including lower 4 bits are used. It is seen from Figure 3 that the regularity of two-dimensional distribution is disappeared by the lower 4 bits. The disappearance of regularity can be achieved by elevating the rank of the matrix consisting of 4th, to 7th row vectors of the matrix G corresponding to the lower 4 bits.

Next, the method for determining the matrix G of the embodiment will be described. In order to generate asymptotic 7-bit random numbers, row vectors are determined sequentially from $l = 1$ to $l = 7$ so as to establish k-dimensional uniform distribution.

$l = 1$

First, an arbitary row vector of the matrix $\hat{G}_1$ is set. As understood from the above, other row vectors are primarily determined. Next, whether or not each row vector of the matrix $\hat{G}_1$ thus obtained is linear and independent is checked. If it is linear and independent, this matrix $\hat{G}_1$ is selected as the normal one. If it is not linear and independent, the two vector first set is replaced by another and the same procedure is performed.

For example if the first row vector of the matrix $\hat{G}_1$ is (1000000), the matrix $\hat{G}_1$ is as follows:

$$\hat{G}_1 = \begin{bmatrix} 1 & 0 & 0 & 0 & 0 & 0 & 0 \\ 0 & 1 & 0 & 0 & 0 & 0 & 0 \\ 0 & 0 & 1 & 0 & 0 & 0 & 0 \\ 0 & 0 & 0 & 1 & 0 & 0 & 0 \\ 0 & 0 & 0 & 0 & 1 & 0 & 0 \\ 0 & 0 & 0 & 0 & 0 & 1 & 0 \\ 0 & 0 & 0 & 0 & 0 & 0 & 1 \end{bmatrix}$$

Since each row vector of this matrix $\hat{G}_1$ is linear and independent, it can be selected as the normal one. By this selection, 7-dimensional distribution when $l = 1$ is assured.

$l = 2$

The row vectors of 1st, 2nd and 3rd rows of the matrix $G_2$ equal to the row vectors of 1st, 2nd and 3rd rows of the matrix $\hat{G}_1$, and then $\hat{G}_2$ is as follows.

$$\hat{G}_2 = \begin{bmatrix} 1\ 0\ 0\ 0\ 0\ 0\ 0 \\ 0\ 1\ 0\ 0\ 0\ 0\ 0 \\ 0\ 0\ 1\ 0\ 0\ 0\ 0 \\ \underline{\hspace{3cm}} \\ \underline{\hspace{3cm}} \\ \underline{\hspace{3cm}} \end{bmatrix}$$

The row vectors indicated by horizontal lines are obtained in the same way as in $l = 1$. That is, an arbitary row vector is established so that each row vector of the matrix $\hat{G}_2$ obtained is linear and independent.

For example, if the row vector of the 4th row is (0111001), the matrix $\hat{G}_2$ is as follows:

$$\hat{G}_2 = \begin{bmatrix} 1\ 0\ 0\ 0\ 0\ 0\ 0 \\ 0\ 1\ 0\ 0\ 0\ 0\ 0 \\ 0\ 0\ 1\ 0\ 0\ 0\ 0 \\ 0\ 1\ 1\ 1\ 0\ 0\ 1 \\ 1\ 0\ 1\ 0\ 1\ 0\ 0 \\ 0\ 1\ 0\ 1\ 0\ 1\ 0 \end{bmatrix}$$

Since each row vector of this matrix $\hat{G}_2$ is linear and independent, it can be selected as the normal one. By this selection, three-dimensional distribution when $l = 2$ is assured.

$l = 3$

The row vectors of 1st, 2nd, 3rd and 4th rows of the matrix $\hat{G}_3$ equal to the row vectors of 1st, 2nd, 4th and 5th rows of $\hat{G}_2$, and then $\hat{G}_3$ is as follows.

$$\hat{G}_3 = \begin{bmatrix} 1\ 0\ 0\ 0\ 0\ 0\ 0 \\ 0\ 1\ 0\ 0\ 0\ 0\ 0 \\ 0\ 1\ 1\ 1\ 0\ 0\ 1 \\ 1\ 0\ 1\ 0\ 1\ 0\ 0 \\ \underline{\hspace{3cm}} \\ \underline{\hspace{3cm}} \end{bmatrix}$$

In this case also, the row vectors of 5th and 6th rows are adequately selected as described above, and the matrix $\hat{G}_3$ satisfying two-dimensional distribution is obtained. For example, the matrix $\hat{G}_3$ is as follows:

13

$$\hat{G}_3 = \begin{bmatrix} 1 & 0 & 0 & 0 & 0 & 0 & 0 \\ 0 & 1 & 0 & 0 & 0 & 0 & 0 \\ 0 & 1 & 1 & 1 & 0 & 0 & 1 \\ 1 & 0 & 1 & 0 & 1 & 0 & 0 \\ 0 & 1 & 1 & 0 & 0 & 1 & 1 \\ 1 & 0 & 1 & 0 & 0 & 0 & 1 \end{bmatrix}$$

I = 4, 5, 6 or 7

For I = 4, 5, 6 or 7, undetermined row vectors in matrices $\hat{G}_4$, $\hat{G}_5$, $\hat{G}_6$ or $\hat{G}_7$ are determined in the similar way. Examples of matrices $\hat{G}_4$, $\hat{G}_5$, $\hat{G}_6$ and $\hat{G}_7$ thus obtained are as follows. Underscored row vectors are those determined anew.

$$\hat{G}_4 = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ \underline{1} & \underline{1} & \underline{0} & \underline{0} & \underline{0} & \underline{1} & \underline{1} \end{bmatrix}$$

$$\hat{G}_5 = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ \underline{1} & \underline{1} & \underline{1} & \underline{1} & \underline{0} & \underline{1} & \underline{0} \end{bmatrix}$$

$$\hat{G}_6 = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ \underline{0} & \underline{1} & \underline{0} & \underline{1} & \underline{1} & \underline{0} & \underline{0} \end{bmatrix}$$

$$
\hat{G}_7 = \begin{bmatrix}
1 & 0 & 0 & 0 & 0 & 0 & 0 \\
0 & 1 & 1 & 1 & 0 & 0 & 1 \\
0 & 1 & 1 & 0 & 0 & 1 & 1 \\
1 & 1 & 0 & 0 & 0 & 1 & 1 \\
1 & 1 & 1 & 1 & 0 & 1 & 0 \\
0 & 1 & 0 & 1 & 1 & 0 & 0 \\
\underline{1} & \underline{1} & \underline{1} & \underline{0} & \underline{1} & \underline{1} & \underline{1}
\end{bmatrix}
$$

Such matrices $\hat{G}_4$, $\hat{G}_5$, $\hat{G}_6$ and $\hat{G}_7$ assure single-dimensional distribution.

The fact that the matrix $\hat{G}_7$ is used as the matrix G of the matrix product circuit 4 has already been described. It will not be required to describe that the random numbers of 7-dimensional uniform distribution is obtained when the upper 1 bit of output of the matrix product circuit 4 is used, and that random numbers of three-dimensional and 4-dimensional distribution are obtained by using upper 2 bits and 3 bits, respectively.

Although asymptotic 7-bit random numbers are generated in the above description, the bit number can be selected arbitrarily. For example, asymptotic 31-bit random numbers may be generated with the matrix product circuit which realizes the following matrix. The characteristic equation is $f(D) = D^{31} + D^{28} + 1$.

**EP 0 178 432 B1**

$$G = \begin{bmatrix}
1000000000000000000000000000000 \\
1001001000010111010110001001111 \\
0110101101011001001111010000101 \\
0100010011101001110000000000000 \\
0010101111001000110000000000000 \\
1000100011010100100011111001010 \\
0001110010110000010000000000000 \\
0110010110000110101000001010011 \\
0101100010110000011100100010001 \\
0111111000100100111111000000011 \\
0010001111010111000110101100001 \\
1111011011001101011110110100000 \\
1000010100001100001010110101011 \\
0101000001111011011000110000100 \\
0000010011010110110110000000111 \\
0111001011000001000000000000000 \\
0100011110101110001101011000010 \\
1101110110011010111101101000001 \\
0010101000011000010101101010111 \\
1011000011110110110001100001000 \\
0000100110101101101100000001110 \\
0000110110111000110100000011000 \\
1010111110010000101001110110101 \\
1111000101111010011001111011010 \\
1100100100010000000100101111011 \\
0000110010001100101101000100011 \\
1100010100011110000111110010000 \\
1000100010100100010111010010101 \\
1110000101110110010110011110000 \\
1110010001001110000010111101010 \\
0001010101001001001110001000100
\end{bmatrix}$$

**Claims**

1. A pseudo-random number generator with a polynomial circuit comprising a finite length feedback shift register (2) generating an M-sequence and according to the characteristic equation $f(D) = D^p + D^q + 1$ with $p > q$ and arithmetic logic (4) connected to the parallel output A of the stages of the shift register, characterised in that

(a) the arithmetic logic (4) has at least two parallel outputs ($b_0$ to $b_6$);

(b) the arithmetic logic (4) is an XOR array definable by a G matrix, in which the row vectors are linear and independent and the effect of which is to multiply the output A of the shift register by G.

2. A number generator as claimed in claim 1, wherein the shift register output A comprises 7 bits generated by the generation polynominal

16

$$f(D) = D^7 + D^4 + 1$$

and

$$G = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 0 \\ 0 & 1 & 0 & 1 & 1 & 0 & 0 \\ 1 & 1 & 1 & 0 & 1 & 1 & 1 \end{bmatrix}$$

3. Pseudo-random number generator in accordance with claim 1, characterized in that for generating 31-bit random vectors B using a 31-bit polynomial circuit with the characteristic equation

$$f(D) = D^{31} + D^{28} + 1$$

and

EP 0 178 432 B1

$$
G =
\begin{bmatrix}
1000000000000000000000000000000 \\
1001001000010111010110001001111 \\
0110101101011001001111010000101 \\
0100010011101001110000000000000 \\
0010101110010001100000000000000 \\
1000100011010100100011111001010 \\
0001110010110000010000000000000 \\
0110010110000110101000001010011 \\
0101100010110000011100100010001 \\
0111111000100100111100000001 1 \\
0010001111010111000110101100001 \\
1111011011001101011110110100000 \\
1000010100001100001010110101011 \\
0101000001111011011000110000100 \\
0000010011010110110110000000111 \\
0111001011000001000000000000000 \\
0100011110101110001101011000010 \\
1101110110011010111101101000001 \\
0010101000011000010101101010111 \\
1011000011110110110001100001000 \\
0000100110101101101100000001110 \\
0000110110111000110100000011000 \\
1010111110010000101001110110 10 \\
1111000101111010011001111011010 \\
1100100100010000000100101111011 \\
0000110010001100101101000100011 \\
1100010100011110000111110010000 \\
1000100010100100010111010010101 \\
1110000101110110010110011110000 \\
1110010001001110000010111101010 \\
0001010101001001001110001000100
\end{bmatrix}
$$

**Patentansprüche**

1. Pseudozufallszahlengenerator mit einer Polynom-Schaltung, die ein Rückkopplungsschieberegister (2) endlicher Länge, das eine M-Folge gemäß der charakteristischen Gleichung $f(D) = D^p + D^q + 1$, wobei $p > q$, erzeugt und eine Arithmetik-Logik (4) aufweist, die mit dem Parallelausgang A der Stufen des Schieberegisters verbunden ist, dadurch gekennzeichnet, daß

(a) die Arithmetik-Logik (4) zumindest zwei Parallelausgänge ($b_0$ bis $b_6$) besitzt;

(b) die Arithmetik-Logik (4) eine XOR-Anordnung ist, die durch eine G-Matrix definierbar ist, in welcher die Reihenvektoren linear und unabhängig sind und deren Wirkung darin besteht, den Ausgang A des Schieberegisters mit G zu multiplizieren.

2. Zahlengenerator nach Anspruch 1, bei welchem der Schieberegisterausgang A 7 Bit aufweist, die durch das erzeugende Polynom

$$f(D) = D^7 + D^4 + 1$$

und

18

$$G = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 1 \\ 0 & 1 & 0 & 1 & 1 & 0 & 0 \\ 1 & 1 & 1 & 0 & 1 & 1 & 1 \end{bmatrix}$$

erzeugt werden.

3. Pseudozufallszahlengenerator nach Anspruch 1, dadurch gekennzeichnet, daß zum Erzeugen von 31-Bit Zufallsvektoren B, eine 31-Bit Polynom-Schaltung mit der charakteristischen Gleichung

$$f(D) = D^{31} + D^{28} + 1$$

und

$$
G = \begin{bmatrix}
1000000000000000000000000000000 \\
1001001000010111010110001001111 \\
0110101101011001001111010000101 \\
0100010011101001110000000000000 \\
0010101111001000110000000000000 \\
1000100011010100100011111001010 \\
0001110010110000010000000000000 \\
0110010110000110101000001010011 \\
0101100010110000011100100010001 \\
0111111000100100111100000011 \\
0010001111010111000110101100001 \\
1111011011001101011110110100000 \\
1000010100001100001010110101011 \\
0101000001111011011000110000100 \\
0000010011010110110110000000111 \\
0111001011000001000000000000000 \\
0100011110101110001101011000010 \\
1101110110011010111101101000001 \\
0010101000011000010101101010111 \\
1011000011110110110001100001000 \\
0000100110101101101100000001110 \\
0000110110111000110100000011000 \\
1010111110010000101001110110 10 \\
1111000101111010011001111011010 \\
1100100100010000000100101111011 \\
0000110010001100101101000100011 \\
1100010100011110000111110010000 \\
1000100010100100010111010010101 \\
1110000101110110010110011110000 \\
1110010001001110000010111101010 \\
0001010101001001001110001000100
\end{bmatrix}
$$

verwendet werden.

## Revendications

1. Générateur de nombres pseudo-aléatoires avec un circuit polynominal comprenant un registre à décalage à rétro-action de longueur finie (2), qui génère une séquence M conformément à l'équation caractéristique $f(D) = D^p + D^q + 1$ avec $p > q$, et une logique arithmétique (4) connectée à la sortie parallèle A des étages du registre à décalage, caractérisé en ce que

(a) la logique arithmétique (4) comporte au moins deux sorties parallèles ($b_0$ à $b_6$);

(b) la logique arithmétique (4) est un réseau OU exclusif définissable par une matrice G, dont les vecteurs de rangée sont linéaires et indépendants et dont l'effet est de multiplier la sortie A du registre à décalage par G.

2. Générateur de nombres suivant la revendication 1, dans lequel la sortie A du registre à décalage comprend 7 bits générés par le polynome de génération

$$f(D) = D^7 + D^4 + 1$$

et

$$G = \begin{bmatrix} 1 & 0 & 0 & 0 & 0 & 0 & 0 \\ 0 & 1 & 1 & 1 & 0 & 0 & 1 \\ 0 & 1 & 1 & 0 & 0 & 1 & 1 \\ 1 & 1 & 0 & 0 & 0 & 1 & 1 \\ 1 & 1 & 1 & 1 & 0 & 1 & 1 \\ 0 & 1 & 0 & 1 & 1 & 0 & 0 \\ 1 & 1 & 1 & 0 & 1 & 1 & 1 \end{bmatrix}$$

3. Générateur de nombres pseudo-aléatoires suivant la revendication 1, caractérisé en ce que, pour générer des vecteurs aléatoires B e 31 bits, on utilise un circuit polynomial de 31 bits avec l'équation caractéristique

$$f(D) = D^{31} + F^{28} + 1$$

et

21

$$
G \;=\; \begin{bmatrix}
100000000000000000000000000000000 \\
100100100001011010110001001111 \\
011010110101100100111010000101 \\
010001001110100111000000000000 \\
001010111100100011000000000000 \\
100010001101010010001111001010 \\
000111001011000001000000000000 \\
011001011000011010100000101011 \\
010110001011000001110010001001 \\
011111110001001001111000000011 \\
001000111101011100011010110001 \\
111101101100110101111011010000 \\
100001010000110000101011010101 \\
010100000111011011000110000100 \\
000001001101011011011000000111 \\
011100101100001000000000000000 \\
010001111010111000110101100010 \\
110111011001101011110110100001 \\
001010100001100001010110101011 \\
101100001111011011000110000100 \\
000010011010110110100000001110 \\
000011011011000110100000011000 \\
101011111001000010100111011010 \\
111100010111101001100111101010 \\
110010010001000000010010111101 \\
000011001000110010110100010001 \\
110001010001110000111110010000 \\
100010001010010001011101001010 \\
111000010111011001011001111000 \\
111001000100111000001011110101 \\
000101010100100100111000100010 \\
\end{bmatrix}
$$

FIG. 1

FIG. 5

FIG. 6

1

FIG. 2

FIG. 3

FIG. 4